# EUROPÄISCHE PATENTSCHRIFT

(11) **EP 0 993 561 B1**
(45) Veröffentlichungstag und Bekanntmachung des Hinweises auf die Patenterteilung: **02.10.2002**
(21) Anmeldenummer: 98912265.0
(22) Anmeldetag: 18.02.1998
(51) Int. Cl.: F16D 27/00, F16D 29/00

(54) **STELLANTRIEB FÜR EINE FAHRZEUGKUPPLUNG**
SERVO-ACTUATOR FOR A CAR CLUTCH
SERVO-MOTEUR POUR EMBRAYAGE DE VEHICULE

(30) Priorität: 05.07.1997 DE 19728830
(43) Veröffentlichungstag der Anmeldung: 19.04.2000
(73) Patentinhaber: ROBERT BOSCH GMBH, 70442 Stuttgart (DE)
(72) Erfinder: CAMPHAUSEN, Hanno, D-72461 Albstadt (DE); HESSDOERFER, Robert, D-97753 Karlstadt-Stetten (DE)
(86) Internationale Anmeldenummer: DE9800475
(87) Internationale Veröffentlichungsnummer: WO99002878

(56) Entgegenhaltungen:
- EP-A- 0 125 871
- EP-A- 0 716 242
- WO-A-95/35452
- GB-A- 2 279 125

## Beschreibung

Die Erfindung betrifft einen Stellantrieb der im Oberbegriff des Anspruchs 1 definierten Gattung.

Bei einem bekannten Stellantrieb dieser Art (EP-A-0 125 871) ist das Schneckenrad des Schneckengetriebes mit einer axial in einem Gehäuse des Stellantriebs abgestützten, drehbaren Spindelmutter verbunden. Die Spindelmutter ist von einer Gewindespindel durchdrungen, welche endseitig einen Federteller aufweist, gegen den eine Druckfeder mit ihrem einen Ende abgestützt ist. Diese greift mit ihrem anderen Ende an einem Ausgangsglied an, mit dem eine Bremse betätigbar ist. Aufgrund der Anordnung von Spindel und Druckfeder in axialer Aufeinanderfolge baut der bekannte Stellantrieb relativ lang. Außerdem besteht bei unzureichendem Reibschluß zwischen der Druckfeder und dem Federteller der Gewindespindel die Gefahr einer Störung der Funktion des Stellantriebs.

Bei einem anderen bekannten Stellantrieb für eine Fahrzeugkupplung (DE 43 20 204 A1) ist eine Gewindespindel eines Spindeltriebs drehfest mit einer Abtriebswelle eines Elektromotors verbunden oder auf dieser unmittelbar ausgebildet. Eine auf der Gewindespindel verschraubbare Spindelmutter bildet einen Arbeitskolben, der in einem hydraulischen Arbeitszylinder undrehbar und längsverschieblich geführt ist. Der Arbeitszylinder ist über eine Hydraulikleitung mit einem auf einen Kupplungshebel wirkenden hydraulischen Stellzylinder verbunden. Mit Drehen des Elektromotors schraubt sich die Spindelmutter auf der Gewindespindel entlang und verschiebt dadurch den Arbeitskolben je nach Drehrichtung der Gewindespindel in die eine oder andere Verschieberichtung. Beim Zustellen des Arbeitskolbens wird Hydrauliköl aus dem Arbeitszylinder in den Stellzylinder gepreßt und die Kupplung über einen Kupplungshebel gegen die Kraft einer Kupplungseinrückfeder ausgerückt. Das Zustellen des Arbeitskolbens wird unterstützt durch eine als Druckfeder ausgebildete vorgespannte Kompensationsfeder, die sich zwischen dem Arbeitskolben und einem den Elektromotor aufnehmenden Gehäuse abstützt und weitgehend die Kraft der Kupplungseinrückfeder, gegen die der Elektromotor beim Zustellen des Arbeitskolbens arbeiten muß, kompensiert. Beim Rückstellen des Arbeitskolbens treibt die Kupplungseinrückfeder über den Kupplungshebel und den Stellzylinder den Arbeitskolben in Gegenrichtung an, wobei sie die Kompensationsfeder wieder spannen hilft, so daß von dem Elektromotor nur noch eine geringe Leistung aufgebracht werden muß.

### Vorteile der Erfindung

Der erfindungsgemäße Stellantrieb mit den kennzeichnenden Merkmalen des Anspruchs 1 hat den Vorteil einer gedrungenen, kompakten Bauform, die bei beengten Einbauverhältnissen in Fahrzeugen den zur Verfügung stehenden Raum optimaler nutzen kann. Dabei ist eine auf Formschluß beruhende Unverdrehbarkeit der Gewindespindel für eine sichere Funktion des Stellantriebs erzielt. Darüber hinaus unterstützt die Druckfeder des Stellantriebs beim Ausrücken der Fahrzeugkupplung die Wirkung des Elektromotors, da die Druckfeder eine Kupplungseinrückfeder kompensiert.

Durch die in den weiteren Ansprüchen aufgeführten Maßnahmen sind vorteilhafte Weiterbildungen und Verbesserungen des im Anspruch 1 angegebenen Stellantriebs möglich.

### Zeichnung

Die Erfindung ist anhand eines in der Zeichnung dargestellten Ausführungsbeispiels in der nachfolgenden Beschreibung näher erläutert. Es zeigen:
Fig. 1 ausschnittsweise einen Längsschnitt eines Stellantriebs, schematisch dargestellt,
Fig. 2 einen Schnitt längs der Linie II-II in Fig. 1,
Fig. 3 eine schematische Darstellung einer von dem Stellantrieb gemäß Fig. 1 und 2 betätigten Fahrzeugkupplung.

### Beschreibung des Ausführungsbeispiels

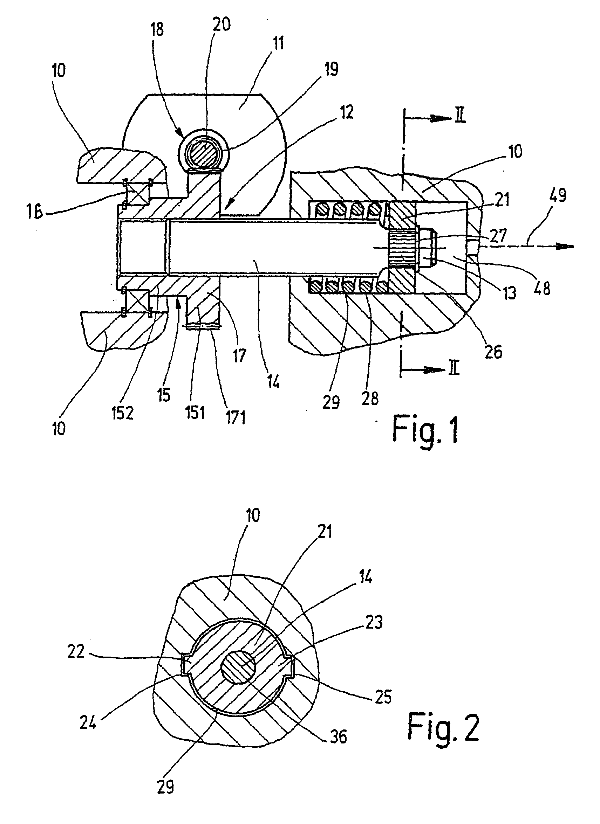

Der in Fig. 1 ausschnittsweise in Längsschnitt schematisch dargestellte Stellantrieb weist ein Gehäuse 10 auf, an dem ein reversierbarer Elektromotor 11 angeflanscht ist und in dem ein Ausgangsglied 13 längsverschieblich und undrehbar geführt ist, das zum mittel- oder unmittelbaren Ausrücken einer Fahrzeugkupplung dient. In bekannter Weise wirkt das Ausgangsglied 13 direkt oder über ein mechanisches oder hydraulisches Übertragungsglied auf den Kupplungshebel einer Kupplung ein und vermag die Kupplung gegen die Kraft einer die Kupplung in Einrückstellung haltenden Kupplungseinrückfeder auszurücken.

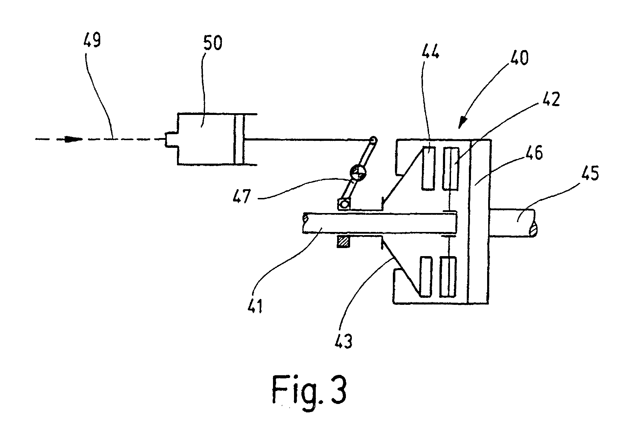

In Fig. 3 ist ein Beispiel einer bekannten, beispielsweise in der DE 43 20 204 A1 beschriebenen Fahrzeugkupplung schematisch dargestellt. Die als Reibungskupplung 40 konzipierte Fahrzeugkupplung weist eine mit einer Getriebeeingangswelle 41 drehfest verbundene Kupplungsscheibe 42 auf, die von der hier als Membranfeder ausgebildeten Kupplungseinrückfeder 43 reibschlüssig zwischen einer Anpreßplatte 44 und einer mit einer Kurbelwelle 45 der Brennkraftmaschine des Fahrzeugs verbundenen Gegenanpreßplatte 46 in Form eines Schwungrads einspannbar ist. Die Kupplung 40 ist mittels eines vom Stellantrieb, und zwar von dessen Ausgangsglied 13, betätigten Ausrückers oder Kupplungshebels 47 gegen die Kraft der Kupplungseinrückfeder 43 auskuppelbar. Zwischen Ausgangsglied 13 und Kupplungshebel 47 ist ein hydraulisches Übertragungsglied angeordnet, das einen Geberzylinder 48 (Fig. 1), eine Hydraulikleitung 49 (Fig. 1 und 3) und einen auf den Kupplungshebel 47 wirkenden Nehmerzylinder 50 umfaßt. Das Ausgangsglied 13 bildet den Stellkolben im Geberzylinder 48. Verschiebt sich das Ausgangsglied 13 in Fig. 1 nach rechts, so wird im hydraulischen Übertragungsglied ein Hydraulikdruck aufgebaut, als dessen Folge der Kupplungshebel 47 verschwenkt und die Reibungskupplung 40 gegen die Kraft der Kupplungseinrückfeder 43 ausgekuppelt wird. Fig. 3 zeigt die Reibungskupplung 4o in Auskuppelstellung, Fig. 1 die Stellung des Ausgangsglieds 13 bei eingerückter Reibungskupplung 40.

Im Gehäuse 10 des Stellantriebs ist ein Spindeltrieb 12 angeordnet, der die an seinem Eingang auftretende Rotationsbewegung des Elektromotors 11 in eine translatorische Bewegung des Ausgangsglieds 13 umsetzt. Der Spindeltrieb 12 umfaßt eine Gewindespindel 14 und eine darauf verschraubbare Spindelmutter 15. Die Spindelmutter 15 ist mittels eines Radiallagers 16 im Gehäuse 10 drehbar und axial unverschieblich gehalten und ist mit dem Schneckenrad 17 eines Schneckengetriebes 18 undrehbar, im Ausführungsbeispiel der Fig. 1 einstückig, verbunden, wozu die Spindelmutter 15 eine Gewindehülse 152 mit Innengewinde und einen an deren einem Ende angeordneten Radialflansch 151 aufweist, auf dessen Umfang eine Schneckenverzahnung 171 ausgebildet ist. Die Schneckenverzahnung 171 am Umfang des Radialflansches 151 kämmt mit der Schnecke 19 des Schneckengetriebes 18, die drehfest auf der Abtriebswelle 20 des Elektromotors 11 angeordnet ist. Die Abtriebswelle 20 des Elektromotors 11 ist dabei rechtwinklig zu der Achse von Spindelmutter 15 und Gewindespindel 14 ausgerichtet.

Auf der Gewindespindel 14 ist drehfest und axial unverschieblich ein Führungsring 21 aufgesetzt, der mit zwei diagonal angeordneten, radial abstehenden Gleitnasen 22,23 in parallel zur Gewindespindel 14 sich erstreckenden Führungsnuten 24,25 eingreift. Die beiden Führungsnuten 24,25 sind in der Innenwand einer in dem Gehäuse 10 eingebrachten Bohrung 26 angeordnet, in der der Führungsring 21 längsverschieblich einliegt. Der von der Spindelmutter 15 abgekehrte vordere Endabschnitt der Gewindespindel 14 ist im Durchmesser reduziert und trägt in einem Teilbereich eine über den Umfang verlaufende Rändelung 26, auf die der Führungsring 21 aufgeschoben und mittels einer Sicherungscheibe 27 festgesetzt ist. Das aus dem Führungsring 21 vorstehende freie Ende der Gewindespindel 14 bildet das Ausgangsglied 13 des Stellantriebs. Auf die Gewindespindel 14 ist eine Druckfeder 28 aufgeschoben, die zur Kompensation der Rückstellkraft der Kupplungseinrückfeder 43 dient und sich einerseits am Führungsring 21 und andererseits im Gehäuse 10 abstützt, wobei sie den Führungsring 21 an die Sicherungsscheibe 27 andrückt. Die Vorspannkraft der Druckfeder 28 ist in der zum Ausrücken der Kupplung erforderlichen Verschieberichtung der Gewindespindel 14, in Fig. 1 also nach rechts, gerichtet.

Bei eingeschaltetem Elektromotor 11 wird die Drehbewegung der Abtriebswelle 20 über die Schnecke 19 des Schneckengetriebes 18 auf das Schneckenrad 17 und damit auf die Spindelmutter 15 übertragen. Die im Radiallager 16 axial unverschieblich festgelegte Spindelmutter 15 wird gedreht, wodurch sich die Gewindespindel 14 über das Spindelgewinde vorwärts, in Fig. 1 nach rechts, verschraubt und das am Ende der Gewindespindel 14 angeordnete Ausgangsglied 13 den Kupplungshebel 47 der Kupplung gegen die Kraft der Kupplungseinrückfeder 43 betätigt. Diese Linearverschiebung der Gewindespindel 14, die durch den Führungsring 21 am Drehen gehindert ist, wird durch die Vorspannung der komprimierten Druckfeder 28 unterstützt, wobei die Druckfeder 28 so ausgelegt ist, daß ihre auf das Ausgangsglied 13 wirkende Federkraft die Kupplungseinrückfeder 43 weitgehend kompensiert. Damit muß der Elektromotor 11 lediglich noch die für die Verstellbewegung des Kupplungshebels 47 erforderliche Kraft aufbringen und kann für eine relativ kleine elektrische Leistung ausgelegt werden. Wird der Elektromotor 11 zum Wiedereinrücken der Kupplung in seine inverse Drehrichtung umgeschaltet, so wird durch die in umgekehrter Richtung sich drehende Spindelmutter 15 die Gewindespindel 14 in Fig. 1 nach links bewegt. Gleichzeitig wird über den Führungsring 21 die Druckfeder 28 wieder komprimiert. Das Zusammendrücken der Druckfeder 28 wird unterstützt von der Kupplungseinrückfeder 43, die über den Kupplungshebel 47 auf das Ausgangsglied 13 wirkt und weitgehend die zum Spannen der Druckfeder 28 erforderliche Arbeit leistet, so daß der Elektromotor 11 auch hier nur noch eine relativ geringe Zusatzleistung aufbringen muß.

## Patentansprüche

1. Stellantrieb für eine Fahrzeugkupplung mit einem in einem Gehäuse (10) längsverschieblich geführten Ausgangsglied (13) zum mitteloder unmittelbaren Ausrücken der Fahrzeugkupplung und mit einem eine rotatorische Eingangsbewegung eines Elektromotors (11) in eine translatorische Bewegung des Ausgangsglieds (13) umsetzenden Spindeltrieb (12), der eine undrehbar mit dem Ausgangsglied (13) verbundene Gewindespindel (14) und eine darauf verschraubbare Spindelmutter (15) aufweist, welche axial unverschieblich festgelegt und drehfest mit einem Schneckenrad (17) eines Schneckengetriebes (18) mit einer von der rotatorischen Eingangsbewegung beaufschlagbaren Schnecke (19) gekoppelt ist, **dadurch gekennzeichnet,**
**daß** auf der Gewindespindel (14) ein Führungsring (21) axial unverschieblich und drehfest sitzt, der mit mindestens einer radial abstehenden Gleitnase (22, 23) in mindestens eine parallel zur Gewindespindel (14) sich im Gehäuse (10) erstreckende Führungsnut (24, 25) eingreift, und
**daß** auf die Gewindespindel (14) eine Druckfeder (28) aufgeschoben ist, die sich zwischen dem Führungsring (21) und dem Gehäuse (10) abstützt und deren Vorspannkraft in der zum Ausrücken der Kupplung erforderlichen Verschieberichtung der Gewindespindel (14) gerichtet ist.

2. Stellantrieb nach Anspruch 1, **dadurch gekennzeichnet, daß** die mindestens eine Führungsnut (24, 25) in der Innenwand einer in einem Gehäuse (10) angebrachten Bohrung (29) angeordnet ist, in der der Führungsring (21) längsverschieblich einliegt.

3. Stellantrieb nach Anspruch 1, **dadurch gekennzeichnet, daß** Spindelmutter (15) und Schneckenrad (17) einstückig miteinander ausgebildet sind.

4. Stellantrieb nach Anspruch 3, **dadurch gekennzeichnet, daß** die Spindelmutter (15) eine Gewindehülse (152) mit Innengewinde und einen davon einstückig abstehenden Radialflansch (151) aufweist, auf dessen Umfang eine mit der Schnecke (19) in Eingriff stehende Schneckenverzahnung (171) ausgebildet ist.

5. Stellantrieb nach Anspruch 2, **dadurch gekennzeichnet, daß** die Spindelmutter (15) mittels eines Radiallagers (16) drehbar und axial unverschieblich im Gehäuse (10) gelagert ist.

6. Stellantrieb nach Anspruch 1, **dadurch gekennzeichnet, daß** die Schnecke (19) auf der Abtriebswelle (20) eines Elektromotors (11) drehfest sitzt, deren Achse rechtwinklig zur Achse von Gewindespindel (14) und Spindelmutter (15) ausgerichtet ist.

7. Stellantrieb nach Anspruch 1, **dadurch gekennzeichnet, daß** das Ausgangsglied (13) von der Gewindespindel (14) selbst gebildet ist.

## Claims

1. Actuating drive for a vehicle clutch, with an output member (13) guided longitudinally displaceably in a housing (10), for the indirect or direct disengagement of the vehicle clutch, and with a spindle mechanism (12) which converts a rotational input movement of an electric motor (11) into a translational movement of the output member (13) and which has a threaded spindle (14) connected non-rotatably to the output member (13) and a spindle nut (15) which is capable of being screwed onto said threaded spindle and which is axially fixed non-displaceably and is coupled fixedly in terms of rotation to a worm wheel (17) of a worm gear (18) by means of a worm (19) capable of being acted upon by the rotational input movement, **characterized in that** the threaded spindle (14) has seated on it axially non-displaceably and fixedly in terms of rotation a guide ring (21) which engages by means of at least one radially projecting sliding nose (22,23) into at least one guide slot (24,25) extending parallel to the threaded spindle (14) in the housing (10), and **in that** the threaded spindle (14) has pushed onto it a compression spring (28) which is supported between the guide ring (21) and the housing (10) and the prestressing force of which is directed in the direction of displacement of the threaded spindle (14) necessary for disengaging the clutch.

2. Actuating drive according to Claim 1, **characterized in that** the at least one guide slot (24,25) is arranged in the inner wall of a bore (29) which is formed in a housing (10) and in which the guide ring (21) is seated so as to be longitudinally displaceable.

3. Actuating drive according to Claim 1, **characterized in that** the spindle nut (15) and the worm wheel (17) are produced in one piece with one another.

4. Actuating drive according to Claim 3, **characterized in that** the spindle nut (15) has a threaded sleeve (152) with an internal thread and a radial flange (151) which projects in one piece from said threaded sleeve and on the circumference of which is formed a worm toothing (171) which is in engagement with the worm (19).

5. Actuating drive according to Claim 2, **characterized in that** the spindle nut (15) is mounted in the housing (10) rotatably and axially non-displaceably by means of a radial bearing (16).

6. Actuating drive according to Claim 1, **characterized in that** the worm (19) is seated fixedly in terms of rotation on the driven shaft (20) of an electric motor (11), the axis of said driven shaft being oriented at right angles to the axis of the threaded spindle (14) and spindle nut (15).

7. Actuating drive according to Claim 1, **characterized in that** the output member (13) is formed by the threaded spindle (14) itself.

## Revendications

1. Servomoteur pour embrayage de véhicule automobile, comprenant un organe de sortie (13), coulissant longitudinalement dans un boîtier (10), pour débrayer directement ou indirectement l'embrayage du véhicule, et une transmission à broche (12) qui transforme le mouvement rotatif d'entrée d'un moteur électrique (11) en un mouvement de translation de l'organe de sortie (13), et qui comprend une broche filetée (14) reliée sans pouvoir tourner à l'organe de sortie (13) et un écrou de broche (15) vissé sur la broche et monté sans pouvoir coulisser axialement mais solidaire en rotation avec une roue tangente (17) d'une transmission à vis tangente (18) dont la vis (19) peut être actionnée par le mouvement rotatif d'entrée,
**caractérisé en ce que**
- sur la broche filetée (14) est montée, solidaire en rotation mais sans pouvoir coulisser axialement, une bague de guidage (21) qui par au moins un ergot de glissement (22, 23) faisant saillie radialement est engagée dans au moins une rainure de guidage (24, 24) creusée dans le boîtier (10) parallèlement à la broche filetée (14), et
- sur la broche filetée (14) est glissé un ressort de pression (28) monté en appui entre la bague de guidage (21) et le boîtier (10) et dont la force de précontrainte est dirigée dans le sens selon lequel doit coulisser la broche filetée (14) pour produire le débrayage.

2. Servomoteur selon la revendication 1,
**caractérisé en ce qu'**
il comporte au moins une rainure de guidage (24, 25) creusée dans la paroi interne d'un alésage (29) réalisé dans le boîtier (10) et dans lequel peut coulisser la bague de guidage (21).

3. Servomoteur selon la revendication 1,
**caractérisé en ce que**
l'écrou à broche (15) et la roue tangente (17) ne forment qu'une seule pièce.

4. Servomoteur selon la revendication 3,
**caractérisé en ce que**
l'écrou à broche (15) présente une douille filetée (152) avec, formant une seule pièce, un filetage interne à une bride radiale (151) en saillie, qui porte à sa périphérie une denture (171) en prise avec la vis (19).

5. Servomoteur selon la revendication 2,
**caractérisé en ce que**
l'écrou de broche (15) est monté par un palier radial (16) dans le boîtier (10), en pouvant tourner mais sans pouvoir coulisser axialement.

6. Servomoteur selon la revendication 1,
**caractérisé en ce que**
la vis (19) est montée avec solidarité en rotation sur l'arbre de sortie (20) d'un moteur électrique (11) dont l'axe est perpendiculaire à l'axe de la broche filetée (14) et de l'écrou de broche (15).

7. Servomoteur selon la revendication 1,
**caractérisé en ce que**
l'organe de sortie (13) est constitué par la broche filetée (14) elle-même.
